## Europäisches Patentamt
## European Patent Office
## Office européen des brevets

(11) Publication number: **0 002 897**
A1

# EUROPEAN PATENT APPLICATION

(21) Application number: 78300760.2

(22) Date of filing: 07.12.78

(51) Int. Cl.²: **B 60 P 1/04**, A 01 K 5/00,
A 01 C 3/06
// A01D90/10

(30) Priority: 16.12.77 GB 5237777

(43) Date of publication of application: 11.07.79
Bulletin 79/14

(84) Designated Contracting States: BE CH DE FR IT LU NL SE

(71) Applicant: WALLEY, CHARLES EDWARD, Cotton Abbotts, Waverton Chester CH3 5PH (GB)

(72) Inventor: WALLEY, CHARLES EDWARD, Cotton Abbotts, Waverton Chester CH3 5PH (GB)

(74) Representative: Spruce, George Philip et al, Shaw, Bowker & Folkes St Martin's House Bull Ring, Birmingham B5 5EY (GB)

(54) Self-discharging vehicle.

(57) Self-discharging vehicle, for example a feed trailer for agricultural use, has a tippin body (12) and a power driven discharge impeller (16) which is mounted on the vehicle chassis (11) (not on the body [12]) adjacent an edge part of a wall (13) of the body (12) which part becomes the lower edge of its discharge mouth when it is tipped. During tipping the material is progressively displaced towards the impeller (16) which throws it clear, preferably to one side of the direction of travel. It is also preferred that the body (12) is raised during tipping and the impeller (16) is positioned at sufficient height to discharge the material over the top of feed fences of agricultural stock yards.

0002897

1.

SELF-DISCHARGING VEHICLE.

DESCRIPTION

This invention relates to vehicles, particularly but not exclusively tractor-drawn trailers for agricultural use, for handling and discharging bulk material, for example silage or other fodder or processed feed served to stock at feed fences of yards or other enclosures in which the stock is wintered, or to stock in the field.

Manual handling of such bulk materials as consolidated silage is extremely laborious and time-consuming. Feed fences of stock yards are usually around 1.3 meters high and conventional feeding apparatus operates through the fence which is slow and inefficient as reasonable alignment with the fence openings is necessary for clear delivery.

The object of the invention is to provide a bulk material vehicle of simple and reliable construction, which is easy to use and speedy in operation, and which will discharge at a height e.g. over the top of a feed fence.

According to the invention there is provided a self-discharging vehicle for bulk material including a chassis; a container body operatively mounted on the chassis for tipping movement relative thereto to displace a load of material in the body towards a discharge mouth thereof defined by edge parts of the body walls; and an operatively power-driven discharge impeller mounted at an operatively fixed location on the chassis at or adjacent that wall edge part which defines the lowermost edge of said mouth when the body is tipped, the body moving relative to the impeller during tipping so that the load is

2.                                              **0002897**

progressively acted on by the impeller for discharge from the
vehicle as tipping proceeds.

3.

0002897

One way of carrying out the invention is now described in detail with reference to the accompanying drawings illustrating a specific embodiment, in which :

Figure 1 is a perspective view of a feed trailer, and

Figure 2 is a like view of the trailer with its body fully tipped.

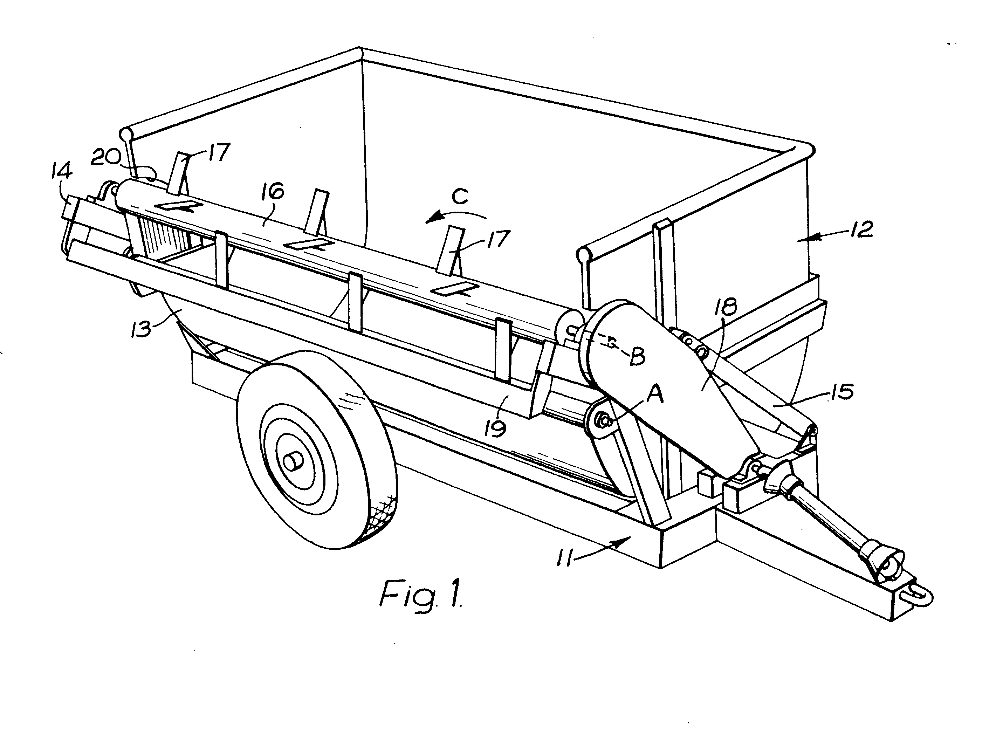

The vehicle shown is a feed trailer to be used in conjunction with the kind of yard feed fence referred to above or for other bulk handling functions and comprises a two-wheeled tractor-drawn chassis 11 on which is mounted a side-tipping body 12. Body 12 has an open top forming a discharge mouth and a rounded outer bottom wall. One side wall 13 ( Figure 1 ) is only approximately half the height of the remaining walls. The body is pivoted for tipping movement about a longitudinal axis A substantially coincident with the upper edge part of side wall 13, hinge shafts of the body on axis A being journalled on cantilever supports 14 at each end of the chassis. Tipping is effected by hydraulic rams 15 ( one only visible in drawings) acting between chassis 11 and the respective ends of body 12 and connected, in use, to the tractor hydraulic system.

Also carried on supports 14 spaced above and slightly laterally outwards from axis A is a rotary impeller 16 the full length of the body in the form of a shaft rotating about a longitudinal axis B having a series of staggered impeller blades 17. The impeller is rotated in the direction of arrow C from the tractor P.T.O. shaft by way of a belt or chain drive 18 mounted on the front cantilever support 14. Immediately below impeller 16 is a sheet metal sill 19 fixed between supports 14.

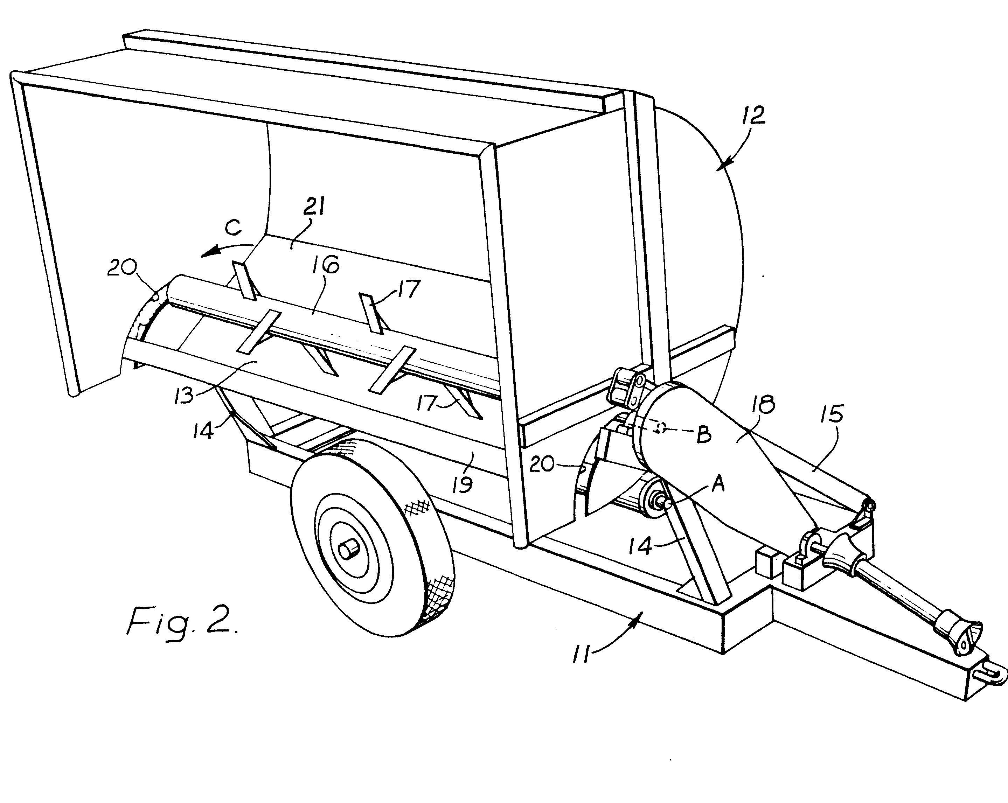

With body 12 in the upright position of Figure 1 the upper zone of the body is level with impeller 16 and lies entirely to one side thereof so that the body is unobstructed for loading e.g. with animal feed from a silage pit or heap using a tractor front loader or similar equipment. To serve the silage or other feed to stock in a

4.

0002897

yard having a feed fence the trailer is simply driven along the fence so that sill 19 is over or adjacent to the top of the fence with impeller 16 rotating and the body being progressively tipped towards the position shown in Figure 2. As tipping proceeds the load is raised and slid sideways towards the discharge mouth defined by the body wall edge parts so that the load is progressively acted on by the impeller 16 and discharged from the trailer over the fence. When the fully tipped position of Figure 2 is reached the entire load will have been discharged as a lower zone of the body has then been elevated to or above the impeller 16. A pair of arcuate slots 20 in the body and walls permits the body to tip past axis B and the supports of sill 19 so that impeller 16 can enter right into the lower zone of body 13 in the fully tipped position in close proximity to the edge part of wall 13 which part defines the lowermost edge of the discharge mouth of the body in that position.

To further facilitate complete emptying of the body a planar false floor 21 ( Figure 2) is fitted within the side wall 13 and part of the curved bottom wall to form a downward slope leading to sill 19 in the fully tipped position. The segmental sectioned space between floor 21 and the bottom wall contains ballast weighting to improve stability of the vehicle when the body is fully tipped and empty.

The above construction is simple, has few moving parts, and is particularly convenient to use and maintain and will result in considerable saving in time and labour particularly in distributing feed as described above in that speedy non-stop discharge can be effected over the top of the feed fence.

It is anticipated that self-propelled or trailer vehicles embodying the invention may have other applications in the handling of bulk materials particularly where easy discharge at a height from the ground is desirable, e.g. in handling farmyard manure, household refuse or similar bulky materials. For some applications the body could be rear or front tipping instead of side tipping.

0002897

As impeller 16 is journalled on a fixed mounting on the vehicle chassis it does not have to move with the body and the need for complex jointed or flexible drive connections or expensive hydraulic motors is avoided. It is preferred that impeller 16 rotates in direction C so that the feed or other material is carried above its axis of rotation to avoid risk of jamming or clogging between the impeller and the edge part of wall 13 or sill 19, and also to further increase the level at which discharge takes place

Other forms of impeller might be employed, e.g. a spiral auger or a flail type of beater, and the invention might be applied to vehicle bodies with other tipping movements e.g. rolling on a curved bottom or sliding in curved guides instead of tipping about a single axis.

0002897

# C L A I M S

1. A self-discharging vehicle for bulk material including a chassis; a container body operatively mounted on the chassis for tipping movement relative thereto to displace a load of material in the body towards a discharge mouth thereof defined by edge parts of the body walls; and an operatively power-driven discharge impeller characterised in that said impeller (16) is mounted at an operatively fixed location on the chassis (11) at or adjacent that wall edge part (19) which defines the lowermost edge of said mouth when the body (12) is tipped, the body moving relative to the impeller during tipping so that the load is progressively acted on by the impeller for discharge from the vehicle as tipping proceeds.

2. A vehicle as in Claim 1 characterised in that said impeller (16) extends along said wall edge part (19) generally outside the envelope of the body (12) when the latter is upright.

3. A vehicle as in Claim 1 or 2 characterised in that the body (12) is mounted for angular movement about a tipping axis (A) fixed with respect to the chassis (11).

4. A vehicle as in Claim 3 characterised in that said tipping axis (A) is substantially above the bottom level of the body (12) when the latter is upright and is coincident with or in near parallel relationship to the impeller (16) so that an upper zone of the body is on a level to one side of the impeller in the upright position, and a lower zone of the body is elevated to the level of or above the impeller in the fully tipped position.

5. A vehicle as in any one preceding claim characterised in that the body (12) is tipped for discharge to one side of the path of travel of the vehicle as it moves forward.

6. A vehicle as in any one preceding claim characterised in that the impeller (16) is rotatably driven about a horizontal axis (B) in close proximity to said wall edge part (19).

7.    A vehicle as in Claim 6 characterised in that the direction of rotation of the impeller (16) is such as to carry the material over its axis of rotation (B).

8.    A vehicle as in Claim 6 or 7 so far as dependent upon Claim 3 or 4 characterised in that the axis of rotation (B) of the impeller (16) is co-incident with or in near parallel relationship to the tipping axis (A) of the body (12).

Fig 1.

Fig. 2.

0002897

## DOCUMENTS CONSIDERED TO BE RELEVANT

| Category | Citation of document with indication, where appropriate, of relevant passages | Relevant to claim |
|---|---|---|
| X | DE - U - 1 817 289 (F. UHLMANN)<br>* page 2, fig. 1, 2 *<br>-- | 1-3, 6 |
| X | DE - A - 1 930 849 (FAHR)<br>* page 7, lines 9 to 21, fig. 1 *<br>-- | 1-4, 6 |
| A | US - A - 3 258 270 (H.J. FERRIS)<br>* complete document *<br>---- | |

**CLASSIFICATION OF THE APPLICATION (Int. Cl.²)**

B 60 P 1/04
A 01 K 5/00
A 01 C 3/06//
A 01 D 90/10

**TECHNICAL FIELDS SEARCHED (Int.Cl.²)**

A 01 C 3/06
A 01 C 19/00
A 01 D 90/10
A 01 K 5/00
B 60 P 1/04
B 65 G 67/24

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&. member of the same patent family, corresponding document

The present search report has been drawn up for all claims

| Place of search | Date of completion of the search | Examiner |
|---|---|---|
| Berlin | 27-02-1979 | SCHOFER |